Europäisches Patentamt

European Patent Office

Office européen des brevets

(19)

(11) Numéro de publication: **0 047 208**
**B1**

(12) **FASCICULE DE BREVET EUROPEEN**

(45) Date de publication du fascicule du brevet: **22.04.87**

(51) Int. Cl.⁴: **A 01 G 15/00, E 01 H 13/00**

(21) Numéro de dépôt: **81401341.3**

(22) Date de dépôt: **26.08.81**

(54) **Machine destinée à provoquer des précipitations.**

(30) Priorité: **28.08.80 FR 8018639**

(43) Date de publication de la demande:
**10.03.82 Bulletin 82/10**

(45) Mention de la délivrance du brevet:
**22.04.87 Bulletin 87/17**

(84) Etats contractants désignés:
**AT BE CH DE GB IT LI LU NL SE**

(56) Documents cités:
**DE-A-2 032 726**
**DE-A-2 836 415**
**DE-C- 834 613**
**DE-C- 956 278**
**FR-A-1 034 875**
**US-A-2 577 023**
**US-A-3 313 487**
**US-A-4 176 790**
**US-A-4 209 131**

(73) Titulaire: **Lebrun, Xavier Michel Marie**
**8 rue des Ciseaux**
**F-75006 Paris (FR)**

(72) Inventeur: **Lebrun, Xavier Michel Marie**
**8 rue des Ciseaux**
**F-75006 Paris (FR)**

(74) Mandataire: **Flechner, Willy et al**
**CABINET FLECHNER 22, Avenue de Friedland**
**F-75008 Paris (FR)**

Courier Press, Leamington Spa, England.

EP 0 047 208 B1

# Description

L'invention concerne un appareil fixe ou mobile destiné à provoquer des précipitations à partir de l'eau contenue dans l'atmosphère terrestre, comprenant un système de modifications des caractéristiques de l'atmosphère environnante, tel qu'un système de réfrigération, ou de dégagement de chaleur ou autre.

On sait déjà provoquer des précipitations en modifiant l'énergie de l'atmosphère, notamment en lui cédant de l'énergie acoustique ou de l'énergie thermique, ou en lui en retirant.

Mais les machines utilisées jusqu'ici sont dangereuses. Elles provoquent aussi la foudre. En outre, ou a cru pouvoir provoquer des précipitations indépendamment de l'état de l'atmosphère.

Au US—A—2577023, on décrit un système électrique de vaporisation d'iodure d'argent dans des nuages. Rien n'est prévu pour faire fonctionner ce dispositif lorsque l'on détecte des conditions favourables et rien n'est prévu pour assurer la sécurité de l'opérateur.

Au DE—C—834613, on décrit un procédé qui consiste à soumettre un nuage à potentiel électrique élevé. Rien n'est prévu pour détecter la présence d'un nuage ou des conditions favorables de l'atmosphère ni non plus pour assurer la sécurité de l'opérateur.

L'invention procure un appareil plus sûr et propose de faire fonctionner cet appareil seulement quand les conditions de l'atmosphère environnante sont favourables.

L'appareil suivant l'invention est définie à la partie caractérisante de la revendication 1.

La télécommande protège le personnel de service de la foudre. Grâce à la commande en fonction d'une caractéristique de l'atmosphère, on ne fait fonctionner la machine qu'à bon escient, c'est-à-dire lorsqu'il y a une possibilité réelle de provoquer des précipitations, comme prévu par exemple par un poste de météorologie éloigné.

La machine peut comprendre un paratonnerre quand elle est fixe ou affecter la forme d'un véhicule.

Comme moyens pour dégager de l'énergie, la machine peut comprendre un système de chauffage ou de refroidissement, notamment par arrosage d'eau, un dispositif à arc électrique, des moyens de dégagement d'un produit chimique ou de vapeur d'eau.

Le dispositif de commande peut comprendre un hygromètre sensible donc à l'humidité de l'atmosphère environnante, un dispositif optique sensible à la couverture nuageuse, notamment sensible aux rayons infrarouges de manière à pouvoir fonctionner de nuit, un anémomètre, un baromètre ou autres.

Lorsque la machine modifie la température de l'atmosphère environnante, elle comprend aussi un accumulateur de chaleur entouré d'une enveloppe thermostatique, et des moyens pour ouvrir l'enveloppe qui sont commandés par un thermomètre de manière à dissiper la chaleur de l'accumulateur lorsque la machine — qui fonctionne par refroidissement de l'atmosphère — est mise hors service.

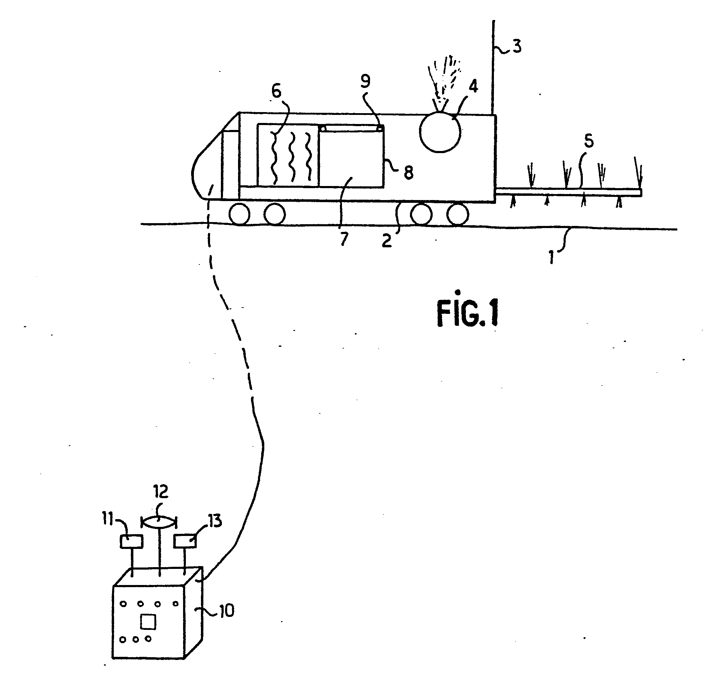

La figure unique du dessin annexé illustre l'invention.

Sur un rail 1 roule un véhicule 2 ferroviaire muni d'un paratonnerre 3. Le véhicule porte un dispositif 4 de dégagement de produits chimiques, ainsi qu'une rampe 5 d'arrosage des plantations ou du sol de part et d'autre de la voie 1.

Le véhicule comporte aussi des moyens 6 pour obtenir un arc électrique et un accumulateur 7 de chaleur entouré d'une enveloppe 8 thermostatique qui peut s'ouvrir autour d'une charnière 9 prévue à extrémité supérieure.

Le véhicule 2 est commandé tant dans son déplacement que pour le fonctionnement des divers dispositifs qu'il porte par un dispositif 10 de télécommande. Outre les moyens de télécommande proprement dits, le dispositif 10 comprend un hygromètre 11, un dispositif optique à rayons infrarouges 12 sensible à la couverture nuageuse et un baromètre 13.

Lorsque les conditions atmosphériques, telles que déterminées par les sondes 11 à 13, sont favorables, ces sondes déclenchent la télécommande 10 de manière à faire fonctionner la machine.

Lorsque les conditions ne sont plus favorables, ces mêmes sondes arrêtent la machine et font pivoter l'enveloppe 8, de manière à évacuer la chaleur contenue dans l'accumulateur de chaleur.

Bien entendu, la télécommande peut s'effectuer par minuterie, l'essentiel étant que l'opérateur soit éloigné de la machine lorsqu'elle fonctionne. La machine peut aussi être placée en hauteur, par exemple sur pylone.

## Revendications

1. Appareil fixe ou mobile destiné à provoquer des précipitations à partir de l'eau contenue dans l'atmosphère terrestre, comprenant un système de modification des caractéristiques de l'atmosphère environnante, tel qu'un système de réfrigération, ou de dégagement de chaleur, ou autre, caractérisé en ce que le système de modification de l'atmosphère est mis en marche par un dispositif de commande, qui ne fonctionne que si des conditions favorables de l'atmosphère prédéterminées à l'avance sont détectées par une sonde commandant ledit système de modification et que le dispositif de commande avec la sonde ne fonctionne qu'après un temps déterminé fixé par une minuterie, mise en marche elle-même par un opérateur.

2. Appareil suivant la revendication 1, caractérisé en ce que le système comprend un moyen pour faire jaillir un arc électrique et la machine comprend un paratonnerre.

3. Appareil suivant la revendication 1, caractérisé en ce qu'il affecte la forme d'un véhicule.

4. Appareil suivant la revendication 1, caractérisé en ce qu'il comprend des moyens de dégagement d'un produit chimique.

5. Appareil suivant la revendication 1, caractérisé en ce que le système est un système de réfrigération ou comprend un système d'arrosage du sol ou des plantations.

6. Appareil suivant la revendication 1, caractérisé en ce que le dispositif de commande comprend un hygromètre, un anémomètre, un baromètre ou un thermomètre.

7. Appareil suivant la revendication 1, caractérisé en ce que la sonde comprend un dispositif optique de détection de nuages.

8. Appareil suivant la revendication 7, caractérisé en ce que le dispositif optique est sensible aux rayons infrarouges.

9. Appareil suivant la revendication 7, caractérisé en ce qu'un accumulateur de chaleur est entouré d'une enveloppe thermostatique.

10. Appareil suivant la revendication 9, caractérisé en ce qu'il comprend des moyens pour dissiper la chaleur de l'accumulateur.

**Patentansprüche**

1. Stationäre oder fahrbare Vorrichtung zum Hervorrufen von Niederschlag ausgehend von den in der Erdatmosphäre enthaltenen Wasser, mit einer Einrichtung zum Modifizieren der charakteristischen Eigenschaften der Umgebungsatmosphäre, zum Beispiel einer Kühleinrichtung, einer Einrichtung zur Abgabe von Wärme oder dergleichen, dadurch gekennzeichnet, daß die Einrichtung zum Modifizieren der Atmosphäre durch eine Steuervorrichtung betätigbar ist, welche nur dann funktioniert, wenn zuvor durch einen Fühler, der die Modifiziereinrichtung steuert, das Vorliegen vorgegebener günstiger atmosphärischer Bedingungen festgestellt worden ist, und daß die Betätigungsvorrichtung mit dem Fuhler nur dann funktioniert, wenn eine feste Zeitspanne, die durch ein Zeitschaltwerk vorgegeben ist, abgelaufen ist, wobei letzteres seinerseits durch eine Bedienungsperson in Gang gesetzt wird.

2. Vorrichtung nach Anspruch 1, dadurch gekennzeichnet, daß die Modifiziereinrichtung Mittel zum Überspringenlassen eines elektrischen Bogens aufweist und die Maschine einen Blitzableiter hat.

3. Vorrichtung nach Anspruch 1, dadurch gekennzeichnet, daß sie die Gestalt eines Fahrżeuges hat.

4. Vorrichtung nach Anspruch 1, dadurch gekennzeichnet, daß sie eine Einrichtung zum Abgeben eines chemischen Produktes aufweist.

5. Vorrichtung nach Anspruch 1, dadurch gekennzeichnet, daß die Modifiziereinrichtung eine Kühleinrichtung ist oder eine Einrichtung zum Berieseln des Erdreiches oder von Pflanzungen aufweist.

6. Vorrichtung nach Anspruch 1, dadurch gekennzeichnet, daß die Steuervorrichtung ein Hygrometer, einen Windmesser, ein Barometer oder ein Thermometer aufweist.

7. Vorrichtung nach Anspruch 1, dadurch gekennzeichnet, daß der Fühler eine optische Einrichtung zur Erkennung von Wolken umfaßt.

8. Vorrichtung nach Anspruch 7, dadurch gekennzeichnet, daß die optische Einrichtung auf infrarote Strahlen anspricht.

9. Vorrichtung nach Anspruch 7, dadurch gekennzeichnet, daß ein Wärmespeicher von einer Isolierhülle umgeben ist.

10. Vorrichtung nach Anspruch 9, gekennzeichnet durch Mittel zum Abführen der im Wärmespeicher enthaltenen Wärme.

**Claims**

1. Fixed or movable apparatus for causing precipitations from water held in the terrestrial atmosphere, comprising a system for changing the characteristics of the surrounding atmosphere, such as a refrigerating, or heat releasing, or other system, characterised in that the system for changing the atmosphere is set in operation by a control device that operates only if favourable conditions of the atmosphere, determined in advance, are detected by a sensor controlling the said changing system and that the control device with the sensor only operates after a specific time determined by a timer itself set in operation by a user.

2. Apparatus according to claim 1, characterised in that the system includes means for striking an electric arc and the machine includes a lightning conductor.

3. Apparatus according to claim 1, characterised in that it is in the form of a vehicle.

4. Apparatus according to claim 1, characterised in that it includes means for releasing a chemical product.

5. Apparatus according to claim 1, characterised in that the system is a refrigeration system or includes a system for sprinkling the ground or plant beds.

6. Apparatus according to claim 1, characterised in that the control device includes a hygrometer, an anemometer, a barometer or a thermometer.

7. Apparatus according to claim 1, characterised in that the sensor includes an optical device for detecting clouds.

8. Apparatus according to claim 7, characterised in that the optical device is responsive to infra red rays.

9. Apparatus according to claim 7, characterised in that a heat store is surrounded by a thermostatic jacket.

10. Apparatus according to claim 9, characterised in that it includes means for dissipating the heat of the store.

FIG.1